**Europäisches Patentamt**

**European Patent Office**

**Office européen des brevets**

(19)

(11) Numéro de publication: **0 036 376**
**B1**

(12) **FASCICULE DE BREVET EUROPEEN**

(45) Date de publication du fascicule du brevet:
**15.02.84**

(21) Numéro de dépôt: **81420029.1**

(22) Date de dépôt: **03.03.81**

(51) Int. Cl.³: **B 23 D 47/06,** B 23 Q 3/06,
B 23 Q 7/04

(54) **Dispositif automatique d'avance réglable et de serrage en position précise de barres, adaptable notamment aux tronçonneuses.**

(30) Priorité: **17.03.80 FR 8006446**

(43) Date de publication de la demande:
**23.09.81 Bulletin 81/38**

(45) Mention de la délivrance du brevet:
**15.02.84 Bulletin 84/7**

(84) Etats contractants désignés:
**AT BE CH DE GB IT LI LU NL SE**

(56) Documents cités:
**DE - A - 2 206 802
DE - A - 2 458 461
FR - A - 2 227 079
GB - A - 2 018 673
US - A - 2 491 901
US - A - 3 194 100
US - A - 3 709 075**

(73) Titulaire: **Dupuy, Antoine, 140, rue Antoine Durafour,
F-42100 Saint Etienne (FR)**

(72) Inventeur: **Dupuy, Antoine, 140, rue Antoine Durafour,
F-42100 Saint Etienne (FR)**

(74) Mandataire: **Buttet, Roger et al, "Cabinet
Charras" 3, Place de l'Hôtel-de-Ville,
F-42000 Saint-Etienne (FR)**

### Dispositif automatique d'avance réglable et de serrage en position précise de barres, adaptable notamment aux tronçonneuses

L'invention concerne les dispositifs de manoeuvre à pression de fluide, adaptables notamment aux machines-outils telles les tronçonneuses, qui autorisent le sciage de barres suivant des longueurs variables.

On connaît des tronçonneuses correspondant au préambule de la revendication 1 (Brevet U.S.A. n. 2.491.901), comportant une fraise-scie pour débiter des barres serrées en bout dans un étau, et avec un chariot d'avance avec mâchoires de serrage qui, lorsque la coupe est terminée, se déplace en translation en vue de saisir la barre pour amener une nouvelle longueur à couper suivant un dimensionnement déterminé.

De telles tronçonneuses ne permettent pas d'obtenir une précision des longueurs de coupe, compte-tenu de l'inertie de la barre, et d'autre part, une coupe rigoureusement perpendiculaire à l'axe de ladite barre, dans le cas de barres légèrement tordues. De plus, par suite de ces inconvénients dus au mauvais positionnement de la barre par rapport à la fraise-scie, cette dernière travaille dans de mauvaises conditions avec risques d'accrochage et un angle d'attaque non conforme des dents.

On connaît également des tronçonneuses destinées à découper les troncs d'arbres (Brevet DE - A - 2.458.461) comportant une scie de découpage disposée au-dessus d'une table-support, et des bras porteurs opposés, munis respectivement de pinces presseuses mobiles, commandées par vérin, en vue du serrage et blocage du tronc d'arbre quel que soit son profil longitudinal ou son positionnement par rapport à ladite table-support.

De telles tronçonneuses n'autorisent pas le réglage contrôlé des longueurs débitées du tronc d'arbre et la coupe précise et rigoureusement perpendiculaire.

La présente invention a pour but de remédier à ces inconvénients.

L'invention telle qu'elle est caractérisée dans les revendications résout le problème consistant à créer un dispositif automatique d'avance réglable et de serrage en position précise des barres, adaptable notamment aux tronçonneuses, comprenant un étau à position fixe diposé à proximité de la fraise-scie pour enserrer l'extrémité de la barre avant la coupe, et à l'arrière, un étau mobile avance barre, qui se déplace après desserrage, suivant la longueur de coupe à obtenir, au moyen d'un dispositif hydraulique, tandis que ses mors parallèles sont déplaçables transversalement et simultanément par un moyen élastique de manière à suivre les imperfections du profil de la barre.

Selon une autre caractéristique, le réglage de la longueur de coupe s'effectue par un vérin horizontal dont le fond est déplaçable en position longitudinale, au moyen d'une vis de manoeuvre avec volant extérieur, de manière à obtenir la variation de la butée extrême d'un piston en amont de l'outil de coupe et suivant la longueur à couper de la barre positionée par l'étau fixe; ledit piston étant en outre solidaire du côté opposé, d'un manchon accouplé en bout à l'étau mobile, en vue d'assurer son déplacement longitudinal correspondant, tandis qu'une tige de commande d'un microcontact, solidaire dudit étau mobile, agit en fin de course sur l'extrémité du fond mobile, en vue de la commande de l'information.

Selon une autre caractéristique, l'étau mobile est établi avec des mors opposés à écartement variable et symétrique par rapport à l'axe du vérin de commande du déplacement en translation, au moyen d'une vis transversale à pas opposés et en deux éléments, l'un des mors étant immobilisé en position d'appui par poignée coopérant avec l'écrou correspondant, tandis que le mors opposé est animé d'un déplacement transversal indépendant, pour le serrage de la barre, au moyen d'un piston mobile commandé hydrauliquement dont l'alésage supporte une demi-longueur de la vis transversale sur laquelle se visse l'écrou solidaire dudit mors mobile.

Selon une autre caractéristique, un premier micro-contact commandé en fin de course du serrage du mors mobile, assure la commande d'information du cycle suivant, tandis qu'un deuxième micro-contact commandé par ledit mors mobile, dans le cas d'une course transversale supplémentaire donnée par l'absence de barre, permet la commande d'arrêt de la machine.

Selon une autre caractéristique, l'embase des mors de l'étau mobile supporte axialement une patte coopérant transversalement avec des ressorts à boudins montés symétriquement et prenant appui sur les branches du bloc-support coulissant longitudinalement sur les colonnes, en vue de la possibilité de déplacement transversal dans les deux sens de l'ensemble des mors par rapport à l'axe longitudinal, de manière à suivre le profil de la barre.

Selon une autre caractéristique, l'étau fixe solidaire du plateau de la machine est établi avec des mors opposes à écartement variable et symétrique par rapport à l'axe longitudinal, au moyen d'une vis transversale à pas opposés et en deux éléments; l'un des mors étant immobilisé en position d'appui par poignée coopérant avec l'écrou correspondant, tandis que le mors opposé est animé d'un déplacement transversal indépendant pour le serrage de la barre, au moyen d'un piston commandé hydrauliquement, solidaire en translation de l'élément correspondant de la vis transversale.

Selon une autre caractéristique, un micro-contact commandé en fin de course de serrage du mors mobile de l'étau fixe, assure la commande d'information du cycle suivant.

Ces caractéristiques et d'autres encore ressortiront bien de la suite de la description.

Pour fixer l'objet de l'invention, sans toutefois le limiter, aux figures des dessins annexés:

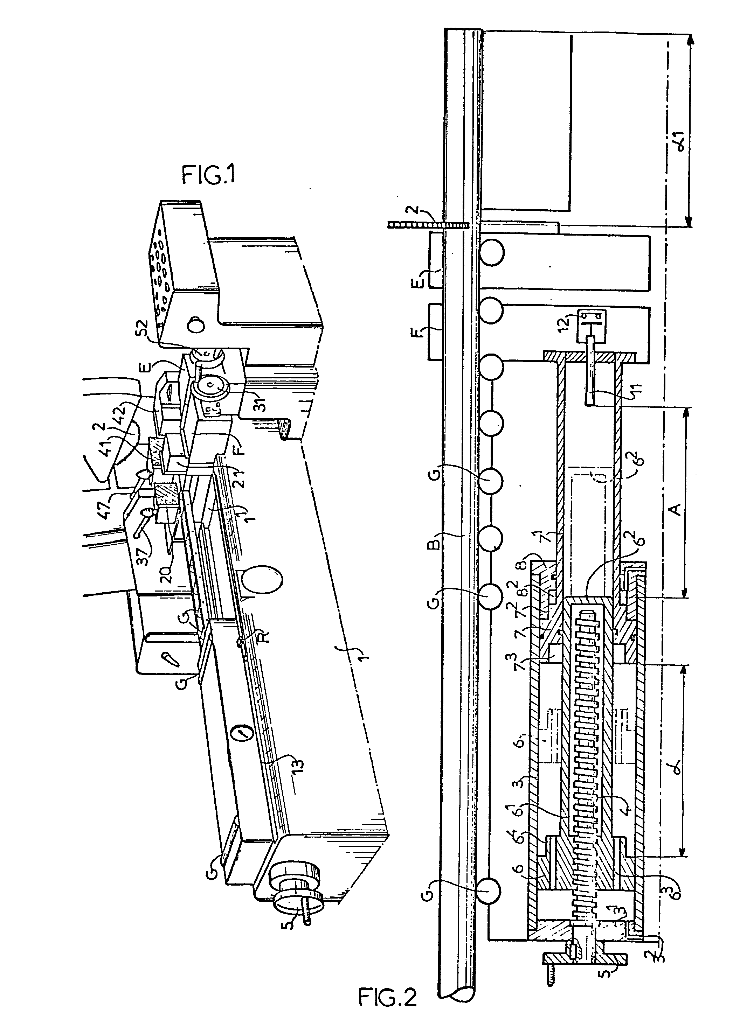

La fig. 1 est à petite échelle, une vue en perspective d'une machine à tronçonner équipée du dispositif d'avance et de serrage de la barre.

La fig. 2 est une vue schématique de face et en coupe, illustrant la commande de déplacement en translation de l'étau mobile selon la longueur de coupe à obtenir sur la barre à débiter.

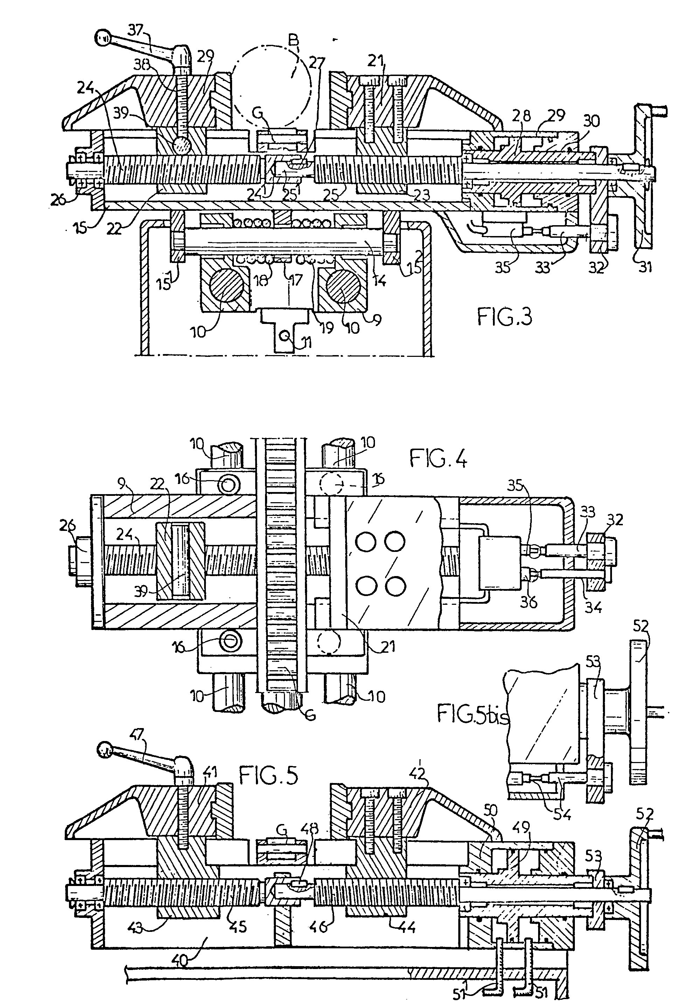

La fig. 3 est une vue en coupe transversale de l'étau mobile.

La fig. 4 est une vue en plan avec coupe partielle, correspondant à la fig. 3.

La fig. 5 est une vue en coupe transversale de l'étau fixe.

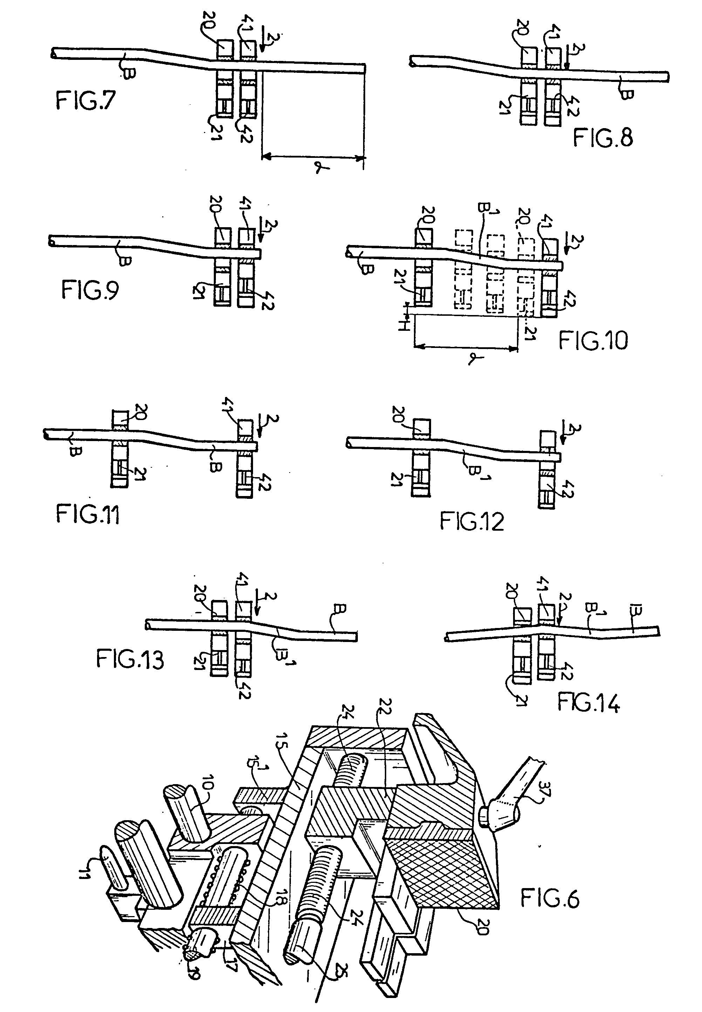

La fig. 5 bis est une vue partielle en plan correspondant à la fig. 5.

La fig. 6 est une vue partielle en perspective de l'étau mobile.

Les figures 7 à 13 sont des vues purement schématiques illustrant la chaîne cinématique de fonctionnement des étaux fixe et mobile, en vue de l'avance automatique de la barre suivant une longueur de coupe déterminée et quel que soit son profil.

Dans l'exemple illusté aux dessins, ce dispositif comporte essentiellement un bâti 1 dont la face supérieure formant plateau reçoit à son extrémité, un étau E à position fixe par rapport à l'outil de coupe rotatif 2, et en amont, un étau mobile F animé d'un mouvement longitudinal en translation sur le plateau dudit bâti 1.

Conformément à la présente invention, cet étau mobile F se déplace en translation suivant une course réglable, depuis une position de butée immuable jusqu'à une position de recul, en vue de saisir la barre B et de l'emmener en déplacement vers l'avant, toujours suivant cette même course, de manière à permettre la coupe à la longueur désirée correspondante.

A cet effet, le bâti 1 autorise axialement, au-dessous de son plateau $1^1$ muni de galets de roulement G, et dans l'axe des mors de l'étau mobile F, la fixation d'un fût cylindrique 3 dont l'extrémité $3^1$ permet le maintien en translation d'une vis 4 avec volant de manoeuvre 5 à son extrémité débordant extérieurement. Cette vis 4 coopère avec un fond de vérin 6 réglable en translation, qui coulisse à l'intérieur du fût 3 et forme à l'avant une longue douille $6^1$ qui recouvre la partie filetée de la vis 4 tout en étant obturée en bout, en $6^2$.

Un piston mobile 7 coulisse librement dans l'alésage du fût 3 et sur la douille $6^1$, entre, d'une part, le fond de vérin 6 à positionnement variable, et d'autre part, un bouchon avant 8 fixé en bout dudit fût 3, et forme également à l'avant, un manchon $7^1$ directement accouplé au coulisseau de l'étau mobile F qui se déplace sur les guides 10.

De ce fait, l'ensemble de l'étau F se déplace vers l'arrière suivant une course variable α comprise entre le piston 7 en position de butée sur le bouchon 8, et le fond 6 préréglé pour saisir en fin de course la barre B et la déplacer vers l'avant d'une course semblable $α^1$ correspondant à la longueur du tronçon à couper.

Il faut considérer également que l'extrémité de l'étau F est rendue solidaire d'une tige mobile 11 de commande d'un micro-contact 12 et qui s'engage axialement dans l'intérieur du manchon $7^1$ pour être sollicitée en poussée en fin de course de recul par le fond $6^2$ de la douille $6^1$, en vue de provoquer la fermeture dudit micro-contact 12 pour la mise en circuit de l'information suivante.

Il est important de considérer que la longueur de la tige mobile 11 est judicieusement déterminée de manière à ce que l'écartement maximum A compris entre son extrémité et le fond $6^2$, corresponde à la course d'ouverture maximum α comprise entre le piston 7 et le fond du vérin 6.

Ces cotes A et α étant rigoureusement identiques, quelle que soit leur variation due au positionnement du fond de vérin 6 par rapport audit piston 7. De ce fait, le micro-contact 12 est toujours en bonne position de fermeture en fin de course de l'étau, selon la course choisie. A cet effet, un index R fixé sur l'étau mobile F permet de contrôler visuellement la longueur de coupe à obtenir du tronçon de barre B, eu égard à une règle graduée 13 fixée sur le plateau $1^1$ et ce, par l'intermédiaire du volant de manoeuvre 5.

La commande hydraulique de déplacement du piston 7 est assurée par une canalisation d'avance $3^2$ établie dans l'épaisseur de l'extrémité $3^1$ du fût 3, tandis que des ouvertures $6^3$ formées dans le fond de vérin 6 permettent d'acheminer le fluide en pression sur la face arrière du piston 7, en vue de son avance, et par suite, de l'étau mobile F. De la même façon, une canalisation de recul $8^1$ formée dans le bouchon avant 8, permet le déplacement arrière dudit piston 7 suivant la cote préétablie.

Il est important de considérer que l'extrémité avant du piston 7 forme une portée décolletée $7^2$ destinée à se centrer en fin de course d'avance de l'étau, dans une chambre correspondante $8^2$ du bouchon 8, de manière à former un laminage du fluide hydraulique pour amortir l'effet d'inertie, en évitant ainsi tout glissement et sursaut de la barre B. Cette disposition se retrouve dans le sens opposé de recul où le piston 7 forme à l'arrière une chambre $7^3$ qui coiffe en fin de course la partie décolletée $6^4$ formée à l'avant du fond de vérin 6.

L'étau mobile F accouplé en translation au manchon $7^1$ est établi essentiellement avec un coulisseau 9 en forme d'U monté à libre coulissement longitudinal sur des colonnes de guidage 10 solidaires du bâti 1 de la machine. Ce coulisseau 9 reçoit transversalement un arbre 14 dont les extrémités débordantes sont rendues solidaires des pattes $15^1$ - $15^2$ fixées sous la semelle 15 d'appui et de guidage des mors, de manière à permettre son libre déplacement transversal dans les deux sens. Des moyens de guidage tels que galets horizontaux 16 assurant son maintien vertical par rapport à la partie supérieure des branches du coulisseau 9.

La partie inférieure axiale de la semelle 15 est rendue solidaire d'une patte médiane 17 centrée à coulissement sur l'arbre 14 et dont les faces opposées autorisent l'appui des ressorts à boudins semblables 18 - 19, butés à l'opposé sur les branches verticales du coulisseau 9. Lesdits ressorts 18 - 19 de même tare, autorisant le rappel permanent de la semelle 15 et par suite, des mors, dans l'axe longitudinal du plateau du bâti 1.

La semelle mobile 15 permet, à sa partie supérieure, l'engagement et le guidage des mors transversaux et opposés 20 et 21 se présentant en regard d'un chemin axial de guidage par rouleaux G de la barre B.

Des blocs-écrous 22 et 23 fixés sur la base des mors 20 et 21, coopèrent par vissage avec la vis de manoeuvre formée de deux éléments coaxiaux 24 et 25 comportant des filetages symétriques à pas opposés, de manière à permettre la commande en écartement ou en rapprochement des mors précités, selon le diamètre de la barre B à débiter.

L'élément 24 correspondant au mors fixe 20 tourne dans une portée de l'extrémité de la semelle 15, tout en étant maintenu en translation par un écrou 26. Du côté opposé, l'élément 24 forme un alésage axial 24¹ avec une rainure longitudinale, pour autoriser l'engagement à coulissement de la portée extrême 25¹ de l'élément 25 et son accouplement en rotation par clavette 27. L'extrémité opposée de l'élément 25 est maintenue en translation dans une douille-piston 28 se déplaçant en translation dans un boîtier 29 formant corps de vérin, formé par l'extrémité de la semelle 15 et obturé par un bouchon 30. Des canalisations de fluide sous pression, disposées de part et d'autre de la partie formant piston 28, autorisant son déplacement en translation et par suite, celui de l'élément 25 et du mors mobile 21.

L'élément 25 reçoit à son extrémité un volant de manoeuvre 31 pour l'entraînement en rotation simultanée des éléments 24 et 25, tandis que l'extrémité de la douille-piston 28 est rendue solidaire d'un bras 32 dont la base reçoit deux tiges de poussée horizontales 33 - 34 qui coopèrent respectivement avec les micro-contacts 35 et 36. Le micro-contact 35 est sollicité en poussée lorsque le mors mobile 21 est en position de serrage sur la barre B pour la commande d'information du cycle suivant, tandis que le micro-contact 36 est commandé en fin de course de la douille-piston 28 en cas d'absence de barre B entre les mors 20 et 21, en vue d'obtenir l'arrêt de la machine.

Selon ces dispositions, il faut considérer que lors de la mise en place de la barre B, les mors 20 et 21 sont rapprochés simultanément suivant le diamètre de ladite barre, par l'intermédiaire du volant de manoeuvre 31, de manière à assurer transversalement son positionnement axial, tandis que le mors fixe 20 est bloqué en position par l'intermédiaire d'un levier de manoeuvre 37 disposé sur la face supérieure dudit mors 20, pour coopérer par vissage avec une tige 38 solidaire d'un axe 39 agissant sur le bloc-écrou 22, en vue de son blocage par rapport à la semelle mobile 15. Le mors mobile 21 est ensuite reculé hydrauliquement par l'action de déplacement de la douille-piston 28 agissant sur l'élément 25.

L'étau mobile F ainsi défini, peut donc se déplacer:
— en translation longitudinale sur le plateau 1¹ du bâti 1, suivant la longueur de l'élément à couper, et transversalement par rapport au plateau 1¹, par l'action des ressorts opposés 18 et 19, pour s'écarter dans les deux sens de l'axe longitudinal et s'adapter ainsi au profil plus ou moins rectiligne de la barre B;
— en position d'approche des mors 20 et 21, selon le diamètre de la barre à tronçonner;
— en position de serrage, par la commande hydraulique du mors mobile 21.

L'étau à position fixe, comme illustré fig. 5, est disposé à l'extrémité du plateau 1¹, en regard de l'outil de coupe 2, et comporte une semelle fixe 40 dont la partie supérieure autorise le guidage des mors transversaux opposés 41 et 42, disposés en regard des rouleaux de guidage G.

Comme précédemment, pour l'étau mobile F, les mors 41 et 42 coopèrent par vissage, de par leurs blocs-écrous 43 et 44, avec les éléments coaxiaux 45 et 46 de la vis de manoeuvre dont les filetages symétriques à pas opposés, permettent la commande d'écartement ou de rapprochement axial desdits mors selon le diamètre de la barre B, et ensuite, le blocage du mors fixe 41 par l'intermédiaire du levier de manoeuvre 47 agissant sur le bloc-écrou 43.

L'élément mobile 46 accouplé en rotation par clavette 48 à l'élément fixe 45, est animé d'un mouvement longitudinal indépendant en translation, par l'intermédiaire d'une douille piston 49 logée dans un boîtier 50 solidaire de la semelle fixe 40 avec des canalisations de fluide sous pression 51 et 51¹, de manière à autoriser le déplacement complémentaire de l'élément mobile 46.

Un volant de manoeuvre 52 fixé à l'extrémité de l'élément mobile 46, permet la rotation manuelle de la vis de manoeuvre, tandis qu'un bras 53 avec tige de poussée, coopère avec un micro-contact 54 sollicité lorsque le mors 42 est en position de serrage.

Ce dispositif automatique d'avance réglable et de serrage en position précise de barres, adaptable notamment aux tronçonneuses, ainsi décrit, il convient d'en expliquer le cycle de fonctionnement:

Selon la fig. 8, les mors mobiles 21 et 42 sont fermés et serrent la barre B en vue de la commande du mouvement de descente de l'outil de coupe 2 pour l'opération de tronçonnage. La descente de l'outil de coupe 2 commande l'ouverture du mors 21 qui commande à son tour, le recul de l'étau F jusqu'à la longueur préréglée. Le mors 21 se referme alors et s'immobilise en attente, selon la fig. 11, la fin de course de remontée de l'outil de coupe provoque la commande d'ouverture du mors mobile 42 de l'étau fixe E et l'avance de l'étau mobile F par l'intermédiaire du piston mobile 7, suivant la course α prédéterminée.

Il est important de considérer que le recul de l'étau mobile F s'effectue comme indiqué, avec une possibilité de déplacement transversal dans les deux sens, suivant cote H, dans l'exemple illustré, de manière à épouser rigoureusement sans contrainte, le profil tordu de la barre B, comme illustré fig. 10.

De ce fait, lors de l'avance de l'étau mobile F avec la barre B (suivant la longueur α), ledit étau peut également se déplacer transversalement, comme illustré en traits interrompus fig. 12, de manière à éviter tout effort et coincement sur les mors de l'étau fixe E, dus à la déformation locale de la barre.

Selon la fig. 13, l'étau mobile F se présente en regard de l'étau fixe E. En fin de course, le mors mobile 42 de l'étau fixe E est serré de manière à maintenir la barre B en vue de l'opération de coupe.

Il faut noter que dans le cas où le serrage du mors mobile 42 par rapport au mors fixe 41 s'exerce sur une partie pentée B1 de la barre B, c'est à dire tordue par rapport à l'axe longitudinal de la machine, ce serrage permet, par suite de la possibilité de déplacement transversal de l'étau mobile F, d'obtenir le déplacement angulaire de ladite barre dans un plan horizontal, de manière à ramener les génératrices de cette partie pentée B1 suivant l'axe longitudinal, rigoureusement perpendiculaires au plan de coupe, comme illustré par le tracé de la fig. 14. Cette caractéristique importante autorise des coupes régulières et précises.

Les avantages de ce dispositif ressortent bien de la description, on souligne en particulier:

— la grande précision et le parallélisme dans les longueurs de coupe;

— la rapidité de changement et de montage de barres de dimensions différentes, sans le recours de clés, tout en restant toujours dans la même position axiale, par suite de la simultanéité de rapprochement et d'éloignement des mors autocentreurs;

— la perpendicularité parfaite de la coupe, quel que soit le profil de la barre;

— la grande précision des longueurs;

— la disposition des amortisseurs de course dans les deux sens, enpêchant tout glissement dû à l'inertie de la barre.

Il est bien évident que le dispositif hydraulique avec vérin horizontal à fond mobile, réglable en position au moyen d'une vis de manoeuvre pour régler la course longitudinale d'un piston, peut être utilisé pour toute autre application; le dit piston pouvant éventuellement commander, de par sa tige, un mouvement d'oscillation contrôlé par crémaillère et pignon, manivelle ou par tout autre moyen.

**Revendications**

1. Dispositif automatique d'avance réglable et de serrage en position précise de barres, adaptable notamment aux tronçonneuses et comprenant un étau (E), à position fixe, disposé en bout d'un plateau (1¹) et à proximité de l'outil de coupe (2), et du côté opposé en alignement avec un étau mobile (F) avance barre (B) avec moyen de commande de déplacement longitudinal suivant la longueur des tronçons de barre à obtenir, caractérisé en ce que l'étau mobile (F) est déplaçable transversalement et automatiquement par rapport au plateau (1¹), tout au long de son cheminement, par un moyen élastique, de manière à suivre les imperfections du profil de la barre (B) placée entre les mors desdits étaux (E - F), tout en permettant, lors du serrage des mors, le rappel rigoureux de son profil, en position axiale et perpendiculaire par rapport à l'outil de coupe (2).

2. Dispositif selon la revendication 1, caractérisé en ce que le moyen de commande contrôlée du déplacement à coulissement de l'étau mobile (F) avance barre, sur le plateau du bâti (1), est obtenu par un vérin horizontal dont le fût (3) obturé à son extrémité arrière, reçoit un fond mobile (6) déplaçable longitudinalement au moyen d'une vis de manoeuvre (4) avec volant extérieur d'entraînement (5), de manière à obtenir la variation de la butée extrême arrière d'un piston (7) coulissant dans ledit fût (3) et accouplé à l'étau mobile (F), ledit piston (7) étant sollicité de chaque côté par un fluide hydraulique pour son déplacement dans les deux sens.

3. Dispositif selon la revendication 2, caractérisé en ce que l'extrémité avant du piston (7) est décolletée en (7²) pour se centrer en fin de course d'avance, dans une chambre axiale (8²) du bouchon avant (8) du fût (3), en formant un laminage du fluide hydraulique en fin de course dudit piston, de manière à amortir et à freiner le déplacement avant de la barre maintenue par l'étau mobile (F) en fin de course d'avance.

4. Dispositif selon les revendications 2 et 3, caractérisé en ce que l'extrémité arrière du piston (7) présente une chambre axiale (7³) qui coiffe la partie décolletée (6⁴) formée sur la face avant du fond mobile (6) du vérin, en vue d'obtenir un laminage du fluide hydraulique pour l'obtention d'une butée souple en fin de course de recul.

5. Dispositif selon les revendications 2 et 4, caractérisé en ce que le fond mobile (6) présente à l'avant une douille (6¹) qui recouvre la vis de manoeuvre (4) et forme en bout, de par son fond (6²), une surface de contact d'une tige mobile (11) solidaire de l'étau mobile, pour commander un micro-contact (12) de mise en circuit du cycle suivant; la longueur débordante de ladite tige mobile (11) étant judicieusement établie pour que l'intervalle formé entre son extrémité arrière et le fond (6²) corresponde à la course d'ouverture maximum comprise entre le piston (7) et le fond (6) du vérin, quelle que soit la position de fin de course de recul dudit piston (7), et par suite, de l'étau mobile.

6. Dispositif selon la revendication 1, caractérisé en ce que l'étau mobile (F) est rendu solidaire d'un index (R) qui se déplace sur le plateau (1¹) du bâti (1) et se présente en regard d'une réglette graduée fixe (13) solidaire dudit plateau (1¹), de manière à contrôler visuellement la course de déplacement dudit étau (F), et par suite, celle du tronçon de barre (B) à obtenir.

7. Dispositif selon la revendication 1, caractérisé en ce que l'étau mobile (F) avance barre, comporte un bloc-support (9) coulissant sur des colonnes de guidage (10) disposées latéralement dans le bâti (1) avec un arbre transversal (14) sur lequel se déplace une semelle (15) porte-mors mobiles (20 et 21), ladite semelle formant patte médiane (17) centrée sur l'arbre (14) pour permettre l'appui de ressorts à boudin (18 - 19) autorisant le déplacement transversal dans les deux sens de ladite semelle (15) et son centrage en position axiale; une vis transversale en deux éléments (24 - 25) à pas opposés, avec volant de manoeuvre (31), coopérant avec des blocs écrous (22 et 23) solidaires des mors (20 et 21), en vue de leur commande de rapprochement ou d'éloignement symétriquement par rapport à l'axe longitudinal et suivant le diamètre de la barre (B) à serrer; un vérin hydraulique agissant en poussée sur un élément mobile (25) de la vis transversale, en vue de son déplacement longitudinal dans les deux sens, pour commander l'ouverture ou la fermeture du mors (21) par rapport au mors fixe (20).

8. Dispositif selon la revendication 7, caractérisé en ce que l'élément mobile (25) de la vis transversale forme en bout, une portée (25¹) montée à libre coulissement dans un alésage (24¹) établi en bout de l'élément opposé (24), afin d'assurer son déplacement en translation, tandis qu'une clavette (27) coopérant avec une rainure, autorise l'accouplement en rotation des deux éléments (24 et 25); une douille-piston (28) solidaire en translation de l'élément mobile (25) se déplaçant dans un boîtier (29) fixé sur la semelle (15), tandis que des canalisations de fluide autorisent son déplacement en translation dans les deux sens, en vue de la commande du mors mobile (21).

9. Dispositif selon la revendication 8, caractérisé en ce que la douille piston (28) est solidaire d'un bras (32) dont la base reçoit des tiges de poussée (33 - 34) coopérant avec des micro-contacts (35 et 36); l'un des micro-contacts (35) étant sollicité lors du serrage du mors mobile (21) sur la barre (B), en vue de la commande du cycle suivant, tandis que l'autre micro-contact (36) est sollicité en fin de course de la douille-piston (28) dans le cas d'absence de la barre (B) entre les mors (20 - 21) pour provoquer l'arrêt de la machine et du dispositif.

10. Dispositif selon la revendication 1, caractérisé en ce que l'étau fixe (E) est établi avec une semelle fixe (40) solidaire de l'extrémité du plateau (1¹) avec transversalement une vis en deux éléments (45 - 46) à pas opposés, avec volant de manoeuvre (52) coopérant avec ler blocs-écrous (43 - 44) solidaires des mors (41 - 42), en vue de leur commande de rapprochement ou d'éloignement symétriquement par rapport à l'axe longitudinal et suivant le diamètre de la barre (B) à serrer; un vérin hydraulique agissant en poussée sur l'élément mobile (46) de la vis, en vue de son déplacement longitudinal dans les deux sens, pour commander l'ouverture ou la fermeture du mors (42) par rapport au mors fixe (41).

11. Dispositif selon la revendication 10, caractérisé en ce que l'élément mobile (46) de la vis de commande est accouplé par clavette (48) par rapport à l'élément fixe (45), tout en pouvant coulisser axialement en translation par l'intermédiaire d'une douille-piston (49) se déplaçant dans un boîtier (50) fixé sur la semelle fixe (40), tandis que des canalisations de fluide autorisent son déplacement en translation dans les deux sens, en vue de la commande de déplacement du mors mobile (42).

12. Dispositif selon la revendication 11, caractérisé en ce que la douille-piston (49) est solidaire d'un bras (53) avec la tige de poussée, pour agir sur un micro-contact (54) sollicité lorsque le mors mobile (42) est en position de serrage, en vue de la commande du cycle suivant.

13. Dispositif selon une des revendications 1, 7, 8, 10, 11, 12, caractérisé en ce que le recul de l'étau mobile (F) permet de par le déplacement transversal de sa semelle porte-mors mobiles (20 et 21), de suivre le profil irrégulier de la barre (B) préalablement serrée dans l'étau fixe (E), de manière à l'amener après serrage, et avancement suivant la longueur de coupe désirée, rigoureusement dans l'axe des mors (41 - 42) de l'étau fixe (E) qui l'enserrent, parallèlement aux génératrices opposées et dans l'axe longitudinal du plateau.

**Patentansprüche**

1. Automatische Vorrichtung zum verstellbaren Vorschub und zum Einspannen von Stangen in einer genauen Stellung, insbesondere zum Anpassen an Zerstückelungsmaschinen, die einen feststehenden, am Ende der Arbeitsplatte (1¹) und in der Nähe des Schnittwerkzeuges (2) eingerichteten Schraubstock (E) aufweist, der an der entgegengesetzten Seite in Fluchtlinie mit einem beweglichen Schraubstock (F) zum Stangenvorschub (B) mit Steuerungsmittel zur Längsverschiebung entsprechend der Länge der herzustellenden Stangenstücke angebracht ist, dadurch gekennzeichnet, dass der bewegliche Schraubstock (F) mittels einer Federvorrichtung querseitig und automatisch in bezug auf die Arbeitsplatte (1¹) der ganzen Länge seiner Bewegungsstrecke nach verschiebbar ist, um den Unregelmässigkeiten des Profils der zwischen den Backen besagter Schraubstöcke (E - F) befindlichen Stange (B) nachzufolgen, wobei die strenge Wiederherstellung des Stangenprofils in axialer und senkrechter Lage in bezug auf das Schnittwerkzeug (2) zum Zeitpunkt des Einspannens der Backen gleichzeitig ermöglicht wird.

2. Vorrichtung nach Anspruch 1, dadurch gekennzeichnet, dass die Einrichtung zur kontrollierten Steuerung der Gleitverschiebung des beweglichen Schraubstocks (F) zum Stangenvorschub auf der Arbeitsplatte des Rahmengestells (1) durch einen waagerechten Druckzylinder gebildet wird, dessen Gehäuse (3) am hinteren Ende verschlossen ist und einen mittels einer Handlungsschraube (4) mit aussenseitigem Antriebshandrad (5) längsseitig verschiebbaren beweglichen Boden (6) zum Varieren des Hinterendanschlags eines im besagten Gehäuse (3) gleitenden, mit dem beweglichen Schraubstock (F) zusammengekuppelten Kolbens (7) aufnimmt, wobei dieser Kolben (7) zu dessen Verschiebung in beiden Richtungen durch eine Druckflüssigkeit beiderseitig beaufschlagt wird.

3. Vorrichtung nach Anspruch 2, dadurch gekennzeichnet, dass das Vorderende des Kolbens schubbewegung in einer Axialkammer ($8^2$) des Vorderzapfens (8) des Gehäuses (3) mit Bildung einer Abrollwirkung der Druckflüssig-Bildung einer Abrollwirkung der Druckflüssigkeit bei Vorschubbeendigung des besagten Kolbens bei ($7^2$) abgedreht ist, um die Verlagerung nach vorne der durch den beweglichen Schraubstock (F) festgehaltenen Stange bei Beendigung der Vorschubbewegung zu dämpfen und abzubremsen.

4. Vorrichtung nach Anspruch 2 und 3, dadurch gekennzeichnet, dass das Hinterende des Kolbens (7) mit einer Axialkammer ($7^3$) versehen ist, die den abgedrehten, auf der Vorderseite des beweglichen Bodens (6) des Druckzylinders gebildeten Teil ($6^4$) überdeckt, um eine Abrollwirkung der Druckflüssigkeit zum Erreichen eines biegsamen Anschlags bei Beendigung der rückwärtigen Hubbewegung zu bewirken.

5: Vorrichtung nach Anspruch 2 und 4, dadurch gekennzeichnet, dass der bewegliche Boden (6) an der Vorderseite eine die Handlungsschraube (4) verdeckende Hülse ($6^1$) aufweist, die am Ende durch derer Boden ($6^2$) eine Berührungsfläche eines beweglichen, mit dem beweglichen Schraubstock festgemachten Schafts (11) zum Einschalten eines Mikrokontaktes (12) für die Schaltung des nächsten Arbeitsvorgangs bildet, wobei die hinausragende Länge besagten beweglichen Schafts (11) entsprechend festgesetzt wird, damit der zwischen dem Hinterende des Schafts und dem Boden ($6^2$) gebildete Zwischenraum der zwischen dem Kolben (7) und dem Boden (6) des Druckzylinders erfassten maximalen Öffnungshubbewegung bei beliebiger Endlage der Rückbewegung besagten Kolbens (7) und demnach des beweglichen Schraubstock entspricht.

6. Vorrichtung nach Anspruch 1, dadurch gekennzeichnet, dass der bewegliche Schraubstock (F) mit einem sich auf der Arbeitsplatte ($1^1$) des Rahmengestells (1) bewegenden Zeiger (R) festgemacht wird, der in bezug auf einen mit besagter Arbeitsplatte ($1^1$) festgemachten, feststehenden Teilungsstab (13) in Gegenüberstellung kommt, damit die Verschiebungsbewegung des besagten Schraubstocks (F) und demnach die Verschiebungsbewegung des herzustellenden Stangenteilstücks (B) durch visuelle Beobachtung kontrolliert werden kann.

7. Vorrichtung nach Anspruch 1, dadurch gekennzeichnet, dass der bewegliche Schraubstock (F) zum Stangenvorschub einen auf im Rahmengestell (1) seitlich angebrachten Führungssäulen (10) verschiebbaren Tragblock (9) mit einer querseitigen Welle (14) aufweist, auf welcher eine die beweglichen Backenhalter (20 und 21) tragende Sohle (15) sich bewegt und eine auf der Welle (14) zentrierte Mittellasche (17) zur Abstützung von Spiralfedern (18-19) bildet, die die querseitige Verschiebung in beiden Richtungen und die Zentrierung der besagten Sohle (15) in Axiallage gestatten, wobei eine aus zwei Elementen (24-25) von entgegengesetzter Steigung, mit Betätigungshandrad (31) versehene, querseitige Schraube mit zu den Backen (20 und 21) festgemachten Mutterblökken (22 und 23) zur symmetrischen Annäherung und Auseinanderentfernung dieser Backen in bezug auf die Längsachse und entsprechend dem Durchmesser der einzuspannenden Stange (B) zusammenwirkt, und ein hydraulischer Druckzylinder auf ein bewegliches Element (25) der querseitigen Schraube zu dessen längsseitiger Verschiebung in beiden Richtungen stosskräftig einwirkt, um das Öffnen oder das Schliessen der Backe (21) in bezug auf der feststehenden Backe (20) zu bewirken.

8. Vorrichtung nach Anspruch 7, dadurch gekennzeichnet, dass das bewegliche Element (25) der querseitigen Schraube am Ende eine in einer am Ende des entgegengesetzten Elements (24) vorgesehenen Bohrung ($24^1$) freigleitend montierte Auflagefläche ($25^1$) für die Verlagerungsbewegung dieses Elements bildet, während ein mit einer Rille zusammenwirkender Keil (27) die Drehkupplung beider Elemente (24) und (25) gestattet und ein in Verlagerung mit dem beweglichen Element (25) mitarbeitender Hülsen-Kolben (28) sich in einem auf der Sohle (15) befestigten Gehäuse (29) bewegt, wobei die Verlagerungsbewegung dieses beweglichen Elements in beiden Richtungen zur Betätigung der beweglichen Backe (21) von Druckflüssigkeitsrohrleitungen aus bewirkt wird.

9. Vorrichtung nach Anspruch 8, dadurch gekennzeichnet dass der Hülsen-Kolben (28) mit einem Arm (32) festgemacht wird, dessen Grundlage die Schubstangen (33 - 34) aufnimmt, die mit den Mikrokontakten (35 und 36) mitarbeiten, wobei der eine dieser Mikrokontakte (35) beim Einspannen der beweglichen Backe (21) auf die Stange (B) zur Einschaltung des nächsten Arbeitsvorgangs betätigt wird, während der andere Mikrokontakt (36) im Falle der Abwesenheit der Stange (B) zwischen den Backen (20 - 21) am Hubende des Hülsen-Kolbens (28) zum Abstellen der Maschine und der Vorrichtung betätigt wird.

10. Vorrichtung nach Anspruch 1, dadurch gekennzeichnet, dass der feststehende Schraubstock (E) mit einer mit dem Ende der Arbeitsplatte (1¹) festgemachten Sohle (40) mit querseitig einer aus zwei Elementen (45 - 46) entgegengesetzter Steigung bestehenden Schraube versehen ist, mit einem Betätigungshandrad (52) das mit den mit den Backen (41 - 42) festgemachten Mutterblöcken (43 - 44) zur symmetrischen Annäherung und Auseinanderentfernung dieser Backen in bezug auf die Längsachse und entsprechend dem Durchmesser der einzuspannenden Stange (B) zusammenwirkt, wobei ein hydraulischer Druckzylinder stosskräftig auf das bewegliche Element (46) der Schraube zu dessen längsseitigen Bewegung in beiden Richtungen einwirkt, um das Öffnen oder das Schliessen der Backe (42) in bezug auf der feststehenden Backe (41) zu bewirken.

11. Vorrichtung nach Anspruch 10, dadurch gekennzeichnet, dass das bewegliche Element (46) der Betätigungsschraube in bezug auf das feststehende Element (45) durch einen Keil (48) gekuppelt ist, wobei dieses bewegliche Element mittels eines Hülsen-Kolbens (49) axial und verlagerungsweise in einem auf der feststehenden Sohle (40) befestigten Gehäuse (50) verschiebbar ist, während Druckflüssigkeitsrohrleitungen die Verlagerungsbewegung dieses beweglichen Elements in beiden Richtungen zur Steuerung der Bewegungen der beweglichen Backe (42) bewirken.

12. Vorrichtung nach Anspruch 11, dadurch gekennzeichnet, dass der Hülsen-Kolben (49) mit der Schubstange mit einem Arm (53) festgemacht ist, um auf einen Mikrokontakt (54) einzuwirken, der zur Ansteuerung des nächsten Arbeitsvorgangs zum Zeitpunkt der Einspannstellung der beweglichen Backe (42) beansprucht wird.

13. Vorrichtung nach einem der Ansprüche 1, 7, 8, 10, 11, 12, dadurch gekennzeichnet, dass die Rückbewegung des beweglichen Schraubstocks (F) durch die Querverschiebung seiner beweglichen Backenhaltersohle (20 und 21) gestattet, dem unregelmässigen Profil der in dem feststehenden Schraubstock (E) voreingespannten Stange (B) nachzufolgen, so dass diese Stange, nach dem Einspannen und der Vorschubbewegung je nach der gewünschten Schnittlänge, streng genau in die Axiallinie der die Stange einspannenden Backen (41 - 42) des feststehenden Schraubstocks (E) parallel zu den entgegengesetzten Erzeugenden und in die längliche Axiallinie der Arbeitsplatte gebracht wird.

**Claims**

1. Automatic device for the adjustable advancement and the clamping in an accurate position of bars, more particularly adapted for cutting off machines, and including a vice (E) with a fixed position, disposed at the end of a workplate (1¹) and adjacent to the cutting tool (2), and on the opposite side in line with a movable vice (F) for the advancement of bar (B) with control means for the longitudinal shifting according to the length of the bar stumps to be cut, characterized in that the movable vice (F) can be shifted transversely and automatically relative to the workplate (1¹), on the whole length of the travel thereof, by an elastic means so as to follow the irregularities of the contour of the bar (B) placed within the jaws of said vices (E - F), while permitting, when the jaws are clamped, the strict return of the contour of the bar in axial position and normal to the cutting tool (2).

2. Device as claimed in Claim 1, characterized in that the means for the monitored control of the sliding shifting of the movable vice for the advancement of bar (B) on the workplate of the framework (1) is obtained by a horizontal pressure cylinder the housing (3) of which is sealed at the rear end thereof an receives a movable bottom (6) capable of being shifted longitudinally by means of an actuating screw (4) with an outside driving handwheel (5) so as to effect the variation of the extreme rear stop of a piston (7) sliding within said housing (3) and coupled to the movable vice (F), said piston (7) being urged at either side by a hydraulic fluid for reciprocating the piston in both directions.

3. Device as claimed in Claim 2, characterized in that the front end of the piston (7) is cut off at (7²) for centering itself on termination of the feeding travel within an axial chamber (8²) of the front plug (8) of the housing (3) while forming a lamination of the hydraulic fluid at the end of the travel of said piston, in order to slow down and to brake the forward shifting of the bar maintained by the movable vice (F) on completion of the advancement travel.

4. Device as claimed in Claims 2 and 3, characterized in that the rear end of the piston (7) is provided with an axial chamber (7³) which covers the cut off portion (6⁴) formed on the front face of the movable bottom (6) of the pressure cylinder for effecting a lamination of the hydraulic fluid in order to obtain a flexible stop on completion of the return travel.

5. Device as claimed in Claims 2 and 4, characterized in that the movable bottom (6) is provided in front with a movable socket (6¹) covering the actuating screw (4) and forming at the end portion thereof, by its bottom (6²), a contact surface of a movable rod (11) integral with the movable vice, for controlling a micro-contact (12) switching in the next processing cycle, the projecting length of said movable rod (11) being conveniently established so that the gap formed between the rear end thereof and the bottom ($6^2$) will correspond to the maximal opening travel comprised between the piston (7) and the bottom (6) of the pressure cylinder, regardless of the return travel end position of said piston (7), and therefore of the movable vice.

6. Device as claimed in Claim 1, characterized in that the movable vice (F) is made integral with a pointer (R) which is shifted on the workplate ($1^1$) of the framework (1) and is located opposite a fixed calibrated rule (13) integral with said workplate ($1^1$) so as to check visually the shifting travel of said vice (F) and therefore the travel of the stump of the bar (B) to be cut off.

7. Device as claimed in Claim 1, characterized in that the movable vice (F) for the advancement of the bar has a support-block (9) sliding on guiding posts (10) disposed laterally in the framework (1) with a cross shaft (14) on which a shoe (15) supporting the movable jaws (20 and 21) is shifted, said shoe forming a medial lug (17) centered on the shaft (14) to permit the abutment of coil springs (18 - 19) for the transverse shifting in both directions of said shoe (15) and the centering thereof in an axial position; a transverse screw consisting of two elements (24 - 25) with opposed pitch, with an actuating handwheel (31) co-operating with nut blocks (22 and 23) integral with the jaws (20 and 21) for the control of the shifting thereof towards and away from one another symmetrically relative to the longitudinal axis and in accordance with the diameter of the bar (B) to be clamped; a hydraulic pressure cylinder urging a movable element (25) of the transverse screw for the longitudinal shifting thereof in both directions, in order to control the opening or the closing of the jaw (21) relative to the fixed jaw (20).

8. Device as claimed in Claim 7, characterized in that the movable element (25) of the transverse screw forms at the end a bearing portion ($25^1$) mounted for free sliding within a bore ($24^1$) established at the end of the opposite element (24) for the movement of translation thereof, while a key (27) co-operating with a groove permits the rotational coupling of the two elements (24 and 25), a piston-socket (28) integral in translation with the movable element (25) being shifted within a casing (29) secured to the shoe (15), while fluid pipelines permit the movement of translation thereof in both directions for the control of the movable jaw (21).

9. Device as claimed in Claim 8, characterized in that the piston-socket (28) is made fast with an arm (32) the bottom of which receives push rods (33 - 34) co-operating with micro-contacts (35 and 36), one of the micro-contacts (35) being stressed when the movable jaw (21) is clamped on the bar (B) for switching in the next cycle, while the other micro-contact (36) is stressed on completion of the travel of the piston-socket (28) in the case of absence of the bar (B) between the jaws (20 - 21), in order to stop the machine and the device.

10. Device as claimed in Claim 1, characterized in that the fixed vice (E) is established with a fixed shoe (40) integral with the end of the workplate ($1^1$) with transversely a screw consisting of two elements (45 - 46) with opposed pitch, with an actuating handwheel (52) cooperating with the block-nuts (43 - 44) integral with the jaws (41 - 42) for controlling the movement thereof towards and away from one another relative symmetrically to the longitudinal axis and in accordance with the diameter of the bar (B) to be clamped, a hydraulic pressure cylinder urging the movable element (46) of the screw for the longitudinal shifting thereof in both directions in order to control the opening and the closing of the jaw (42) relative to the fixed jaw (41).

11. Device as claimed in Claim 10, characterized in that the movable element (46) of the control screw is coupled by means of a key (48) relative to the fixed element (45), while being capable of shifting axially in translation through the intermediary of a piston-socket (49) shifted within a casing (50) secured to the fixed shoe (40), fluid pipelines permitting the shifting in translation of this piston-socket in both directions for the control of the movement of the movable jaw (42).

12. Device as claimed in Claim 11, characterized in that the piston-socket (49) is integral with an arm (53) together with the push rod for actuating a micro-contact (54) which is urged when the movable jaw (42) is in the clamping position for switching in the next cycle.

13. Device as claimed in Claims 1, 7, 8, 10, 11, 12, characterized in that the return of the movable vice (F), owing to the transverse shifting of the shoe thereof which supports the movable jaws (20 and 21), permits to follow the irregular contour of the bar (B) having been clamped previously within the fixed vice (E), so that this bar, after clamping and advancement in accordance with the desired cut length, will be brought substantially within the axis of the jaws (41 - 42) of the fixed vice (E) which are clamping said bar, parallel to the opposed generatrices and within the longitudinal axis of the workplate.

FIG.1

FIG.2

FIG.3

FIG.4

FIG.5bis

FIG.5

FIG.7

FIG.8

FIG.9

FIG.10

FIG.11

FIG.12

FIG.13

FIG.14

FIG.6